# EUROPEAN PATENT APPLICATION

(11) **EP 0 708 159 A2**
(43) Date of publication of application: **24.04.1996**
(21) Application number: 95115929.2
(22) Date of filing: 10.10.1995
(51) Int. Cl.: C09D 175/00, C08G 18/80

(54) **Clearcoat compositions containing imino-functional melamines**

(30) Priority: 17.10.1994 US 323552
(71) Applicant: BASF CORPORATION, Mount Olive, New Jersey 08728-1234 (US)
(72) Inventor: Briggs, Rodney L., Linden, Michigan 48451 (US); Oermann, Bruce E., Clinton Township, Michigan 48035 (US)
(74) Representative: Münch, Volker, Dr.

(57) **Abstract**

The present invention is directed to one-component coating compositions containing partially butylated or partially methylated, imino functional melamine crosslinking agents in combination with one or more blocked isocyanate crosslinking agents, a process for coating a substrate with the composition and a coated substrate, having the coating thereon. The cured coatings demonstrate excellent humidity

## Description

### FIELD OF THE INVENTION

The present invention is related to the use of a mixture of imino-functional melamine crosslinking agents and blocked isocyanate crosslinking agents. More particularly, the present invention is related to coating compositions containing imino-functional melamine crosslinking agents and blocked isocyanate crosslinking agents.

### BACKGROUND OF THE INVENTION

One component coating compositions generally contain a film forming polymer and a crosslinker which is a melamine crosslinker or a blocked isocyanate crosslinker or mixture of blocked isocyanate crosslinkers. One-component compositions include all components in one mixture and react to crosslink upon heating. Melamine crosslinking agents are formed as follows.

The melamine crosslinking agent is formed by a substitution reaction of formaldehyde with any or all of the six active hydrogens on a melamine ring. The resulting methylol groups are relatively unstable and typically incompatible with the vehicles utilized in coating compositions. Thus, a subsequent addition reaction is applied to some or all of the methylol groups with an alcohol to block them and enhance the aromatic solubility of the resin. A primary alcohol such as methanol or n-butanol is used in the addition reaction. During this process, the crosslinker molecules may be induced to self-condense. The degree of self-condensation, or degree of polymerization determines the molecular weight and distribution of the resin. The molecular weight, along with the level and type of alkylation, and formaldehyde content will directly influence the resin viscosity.

As mentioned above, an alternative to melamine crosslinkers in one component coating compositions are the isocyanate crosslinking agents. Generally one-component compositions utilize blocked isocyanate crosslinkers to prevent reaction of the crosslinker and principal resin until the mixture is heated to the deblocking temperature. The deblocking temperature typically ranges from 135°C to 155°C. The term "blocked isocyanate" refers to the fact that the isocyanate reactive functionality -NCO- is reacted with a blocking agent such as an oxime. Problems result with the use blocked isocyanate crosslinkers, due to the high cure temperatures. Because the coating cures at such a high temperature, the viscosity of the film decreases as the temperature increases, resulting in sag of the coating and unacceptable cured films.

Unexpected results are achieved with the present invention which is directed to a one component coating composition containing a partially alkylated imino-functional melamine crosslinking agent in combination with at least one blocked isocyanate crosslinking agent. The mixture of crosslinking agents unexpectedly results in a coating composition having improved solids content and rheology control, and improved cure. The cured coating unexpectedly demonstrates improved humidity resistance and good resistance to environmental etch.

### SUMMARY OF THE INVENTION

The present invention is directed to one-component coating compositions containing partially alkylated, imino-functional melamine crosslinking agent in combination with one or more blocked isocyanate crosslinking agents, a process for coating a substrate with the composition and a coated substrate. The cured coatings demonstrate improved resistance to humidity.

The composition of the present invention includes a film forming polymer and a partially alkylated imino-functional melamine crosslinking resin in mixture with at least one blocked isocyanate crosslinking resin.

Further disclosed is a process for coating a substrate. In general this process comprises applying the one-component coating composition described above to a substrate, so that a film is formed on the substrate, and subsequently curing the film, to produce a cured coating on the substrate.

The coating of the present invention is useful as an automotive coating composition, and particularly useful as a clearcoat composition for automotive applications.

In the field of automotive coatings it has become an objective to obtain a melamine containing topcoat or clearcoat of a color-plus-clear composite coating that is resistant to damage caused by humidity. It is well known in the art that coatings containing partially alkylated melamines generally exhibit weaker humidity resistance. A color plus clear composite coating refers to a multi-layer coating applied to a surface, particularly an automotive vehicle surface, where at least one pigmented coating is applied to a surface and at least one substantially transparent coating (i.e. clearcoat) is applied over the pigmented coating layer. The coating composition of the present invention provides a melamine containing composition, that when cured demonstrates excellent humidity resistance. Further, the coating composition has improved solids content and rheology control. The cured coating demonstrates improved appearance due to decrease or elimination of sag.

### DETAILED DESCRIPTION OF THE INVENTION

The present invention is a one component coating composition comprising a film forming polymer including thereon at least one reactive functionality, a partially alkylated imino functional melamine crosslinking agent and at least one blocked isocyanate crosslinker.

The film forming polymer utilized in the present invention is selected from the group consisting of acrylic polymer, polyurethane polymer, polyester polymer, polyamide polymer and mixtures thereof. Preferably the polymer is an acrylic polymer. The reactive functionality on the film forming polymer is selected from the group consisting of hydroxyl functionality, amine functionality, epoxy functionality, carboxylic acid functionality and anhydride functionality. The preferred functionality is a hydroxyl functionality.

Most preferred are partially butylated melamine resins sold by Monsanto, St. Louis, MO, under the trademark Resimene® 5503 and Resimene® 9539. Also preferred is a partially methylated melamine resin sold by Monsanto under the trademark Resimene® 2608.

Suitable isocyanate crosslinkers include blocked isocyanurates of an aliphatic diisocyanate. Particularly preferred are crosslinkers selected from the group consisting of blocked isocyanurates of isophorone diisocyanate, blocked isocyanurates of hexamethylene diisocyanate and derivatives thereof, biurets of blocked isocyanurates of isophorone diisocyanate and biurets of blocked isocyanurates of hexamethylene diisocyanate and mixtures thereof. The crosslinkers of the present invention are formed by reacting sufficient quantities of organic polyisocyanates, with sufficient quantities of blocking agent, at a sufficient temperature, for a sufficient amount of time, under reaction conditions conventional in the art, such that no free isocyanate groups are present when the reaction has run its course.

The isocyanate crosslinker(s) utilized in the present invention have two or more functional groups (i.e. reactive crosslinker functionalities) thereon that react with the functional groups on the polymer molecule. Generally, the blocked crosslinkers are available commercially. The blocked isocyanurate of isophorone diisocyanate is available as Desmodur BL4165, from Miles Corporation of Pittsburgh, Pennsylvania. The blocked isocyanurate of hexamethylene diisocyanate is also available from Miles Corporation, as Desmodur BL3175.

The present invention preferably includes a mixture of the melamine crosslinker and the blocked isocyanate crosslinker or mixture of blocked isocyanate crosslinkers in a ratio of isocyanate to melamine crosslinker of 90:10 to 65:35. The melamine crosslinker is present in the coating composition in an amount between 10 and 25 percent by weight, based on total coating composition weight. The isocyanate crosslinker is present in an amount between 20 and 35 percent by weight, based on total coating composition weight.

The composition of the present invention may further comprise any additional ingredient which imparts any desired characteristic to the composition, or to the process, or to the cured coating made therefrom. Such additional ingredients comprise pigments, rheology control agents, leveling agents, catalysts, cure inhibiting agents, anti-yellowing agents, ultraviolet absorbers, free radical scavengers, and anti-cratering agents.

To form the coating, the crosslinkers are combined with the polymer and a liquid carrier in which the crosslinkers and polymer dissolve and/or disperse. The resulting mixture must be stored at a temperature below the deblocking temperature so that the crosslinker cannot react with the polymer. The deblocking temperature typically ranges from 135°C to 155°C. At this temperature, the blocking agent volatilizes, and the isocyanate is free to react with the polymer. The one component mixture can be sprayed onto a substrate so that a film of the composition is formed on the substrate. The film of the mixture on the substrate is thereafter heated in an oven so that the crosslinker and polymer react to produce a crosslinked polymer network (i.e. cured coating). In the preferred embodiment, the coated substrate is heated to a temperature of between 140°C and 155°C, the cure temperature of the blocked isocyanate crosslinker. The presence of the melamine crosslinker provides crosslinking at lower temperature, before the unblocking temperature of the isocyanate crosslinker is reached. This initial crosslinking provided by the melamine crosslinker helps to improve intercoat adhesion and consequently prevents sag of the coating on the substrate. Sag often occurs when only blocked isocyanate crosslinkers are used, due to the decrease in viscosity of the coating before the substrate reaches the higher cure temperature of the blocked isocyanate. Sag is the downward movement of a paint film between the times of application and setting, resulting in an uneven coating having a thick lower edge. The isocyanate crosslinker provides increased crosslinking density which results in improved appearance of the coating, as the basecoat does not penetrate the clear coat, a phenomenon known as strike in. Further, the use of the blocked isocyanate improves resistance of the cured coating to environmental etch. The mixture of partially alkylated imino-functional melamine crosslinkers together with the blocked isocyanate crosslinker provides unexpected results in that the coatings demonstrate very good humidity resistance usually not attainable with the use of methylated or butylated imino-functional melamine crosslinkers alone.

The invention is further illustrated by the following non-limiting examples. In these examples, coatings were prepared from the polymers and compositions of the present invention and subjected to test procedures to determine and illustrate the susceptibility of the coating to humidity and environmental etching.

### EXAMPLES

### Example 1

### Coating Composition Containing Methylated Polymeric Melamine Crosslinker (Control)

| Ingredient | Amount Wt % * |
|---|---|
| Acrylic Resin | 51.75 |
| Blocked Isocyanate Mixture 1 | 25.40 |
| Methylated Melamine Crosslinker 2 | 13.26 |
| Adipic Dihydrazide | 0.62 |
| Fumed Silica Grind | 3.86 |
| Ultraviolet Absorber | 3.00 |
| Hindered Amine Light Stabilizer | 1.50 |
| Plasticizer | 0.20 |
| Silicone Mixture | 0.005 |
| Polybutyl acrylate | 0.25 |
| Tin Catalyst | 0.20 |
| Total | 100.00 |

| | |
|---|---|
| * Wt % is based on total coating composition solids weight. | |
| 1 Cymel 327, a methylated melamine crosslinker sold by Monsanto of St. Louis, Missouri 63167. | |
| 2 Mixture of blocked isophorone diisocyanate and blocked hexamethylene diisocyanate, sold as XP-7058, from Miles Corporation of Pittsburgh, Pennsylvania. | |

### Example 2

### Coating Composition Containing Methylated Melamine and Isocyanate Crosslinkers

Coating compositions were prepared as set forth in Example 1, where the ingredients and amounts were identical, except that Resimene® HM-3711, a methylated melamine crosslinker was substituted for the Cymel® 327, in the same amount.

### Example 3

### Coating Composition Containing Butylated Melamine and Blocked Isocyanate Crosslinkers

Coating compositions were prepared as set forth in Example 1, where the ingredients and amounts were identical, except that a butylated polymeric melamine crosslinker Resimene® BM-9539, was substituted for the Cymel® 327, in the same amount.

### Example 4

### Coating Composition Containing Butylated Melamine and Blocked Isocyanate Crosslinkers

Coating compositions were prepared as set forth in Example 1, where the ingredients and amounts were identical, except that a butylated polymeric melamine crosslinker Resimene® BM-5503, was substituted for the Cymel® 327, in the same amount.

### Test Results for Coating Compositions

All clearcoat compositions prepared according to Examples 1-4 were applied over the same formulation of black basecoat.

**Table 1**

| Humidity Resistance QCT for 16 Hours at 140°F using Cleveland Condensing Cabinet | |
|---|---|
| Coating | Physical Defects |
| 1 | Significant Whitening and Blistering |
| 2 | Some Whitening and Blistering |
| 3 | Minimal Whitening and Blistering |
| 4 | Minimal Whitening and Blistering |

**Table 2**

| Comparative Data for Ex. 1-4 | | | | |
|---|---|---|---|---|
| Coating | Viscosity* | Gravelometer | Tukon Hardness | Solvent Resistance** |
| 1 | 40.2 | 7 | 12.0 | pass |
| 2 | 39.6 | 6+ | 9.4 | pass |
| 3 | 40.6 | 7 | 11.6 | pass |
| 4 | 38.8 | 6+ | 10.6 | pass |

| | | | | |
|---|---|---|---|---|
| *Viscosity is measured with a #4F at 72°F | | | | |
| **Solvent Resistance 200 Double Rubs with Methyl Ethyl Ketone | | | | |

### Etch Gradient Test

Test 1 is conducted by application of KCl to coated panels, followed by heating and then rinsing with water. Test 2 is conducted by application of H₂SO₄ to coated panels, followed by heating and rinsing with water. Lower values correspond to less etch and better appearance. The results of the etch Gradient Tests are set forth in Table 3.

**Table 3**

| Results of Etch Gradient Tests | | | |
|---|---|---|---|
| Coating | Test 1 | Test 2 | Final |
| 1 | 112 | 133 | 126 |
| 2 | 108 | 141 | 129 |
| 3 | 110 | 140 | 130 |
| 4 | 113 | 140 | 130 |

## Claims

1. A coating composition comprising
i) a film forming polymer including at least one reactive functionality,
ii) a partially alkylated imino-functional melamine crosslinker selected from the group consisting of butylated and methylated imino-functional melamine crosslinkers and
iii) at least one blocked isocyanate crosslinking agent,
wherein the coating composition demonstrates good humidity resistance.

2. The coating composition of claim 1, wherein the isocyanate crosslinking agent is selected from the group consisting of blocked trifunctional aliphatic isocyanurates, blocked isocyanurates of aliphatic diisocyanates, biurets of these isocyanates and mixtures thereof.

3. The coating composition of claim 1, wherein the isocyanate crosslinker is selected from the group consisting of blocked isocyanurates of isophorone diisocyanate, blocked isocyanurates of hexamethylene diisocyanate and derivatives thereof, biurets of blocked isocyanurates of isophorone diisocyanate and biurets of blocked isocyanurates of hexamethylene diisocyanate and mixtures thereof.

4. The coating composition of claim 1, wherein the film forming polymer is at least one polymer selected from the group consisting of acrylic polymer, polyurethane polymer, polyester polymer, polyamide polymer and mixtures thereof.

5. The coating composition of claim 1, wherein the reactive polymer functionality is selected from the group consisting of hydroxyl functionality, amine functionality, epoxy functionality, carboxylic acid functionality and anhydride functionality.

6. The coating composition of claim 1, wherein the film forming polymer is an acrylic polymer.

7. The coating composition of claim 1, wherein the coating is the clearcoat of a color-plus-clear composite coating.

8. The coating composition of claim 1, wherein the melamine resin is present in an amount between 10.0% and 25.0% by weight, and the isocyanate crosslinking agent is utilized in an amount between 15.0% and 35.0% % by weight, based on total coating composition weight.

9. A process for coating a substrate, the process comprising:
A. applying a one component composition to a substrate to form a film on the substrate, the composition including:
i) a film forming polymer including at least one reactive functionality,
ii) a partially butylated imino-functional melamine crosslinker and
iii) at least one blocked isocyanate crosslinking agent,
B. curing the film of the one component composition on the substrate by heating the film-coated substrate to a temperature of between about 135°C and about 155°C, to produce a cured coating.

10. The process of claim 9, wherein step A comprises applying a coating including isocyanate crosslinking agent selected from the group consisting of blocked trifunctional aliphatic isocyanurates, blocked isocyanurates of aliphatic diisocyanates, biurets of these isocyanates and mixtures thereof.

11. The process of claim 9, wherein step A comprises applying a coating including isocyanate crosslinker selected from the group consisting of blocked isocyanurates of isophorone diisocyanate, blocked isocyanurates of hexamethylene diisocyanate and derivatives thereof, biurets of blocked isocyanurates of isophorone diisocyanate and biurets of blocked isocyanurates of hexamethylene diisocyanate and mixtures thereof.

12. The process of claim 9, wherein step A comprises applying a coating including a film forming polymer which is selected from the group consisting of acrylic polymer, polyurethane polymer, polyester polymer, polyamide polymer and mixtures thereof.

13. The process of claim 9, wherein step A comprises applying a coating including a film forming polymer having a reactive polymer functionality, wherein the reactive polymer functionality is selected from the group consisting of hydroxyl functionality, amine functionality, epoxy functionality, carboxylic acid functionality and anhydride functionality.

14. The process of claim 9, wherein the step A comprises applying a coating including a film forming polymer, wherein the film forming polymer is an acrylic polymer.

15. The process of claim 9, wherein step A comprises applying a coating including melamine crosslinking agent present in an amount between 10.0% and 25.0% by weight, and isocyanate crosslinking agent present in an amount between 15.0% and 35.0% by weight, based on total coating composition weight.

16. A process for coating a substrate by forming a color-plus-clear composite coating, said process comprising
A. applying at least one pigmented coating to a substrate surface;
B. applying at least one substantially transparent coating over the pigmented coating layer, wherein the substantially transparent coating is a one component coating comprising
i) a film forming polymer including at least one reactive functionality,
ii) a partially butylated imino-functional melamine crosslinker and
iii) at least one blocked isocyanate crosslinking agent,
B. curing the substantially transparent coating, either simultaneously with or subsequent to the pigmented coating layer, by heating to a temperature of between about 135°C and about 155°C, to produce a cured coating.

17. A substrate comprising a coated article coated according to the process defined in claim 9.
